# EUROPEAN PATENT APPLICATION

(11) **EP 4 365 689 A1**
(43) Date of publication of application: **08.05.2024**
(21) Application number: 23207477.3
(22) Date of filing: 02.11.2023
(51) Int. Cl.: G05B 19/042, G05B 23/02

(54) **CLOSED-LOOP INPUT/OUTPUT POINTS TESTING**

(30) Priority: 04.11.2022 US 202218052716
(71) Applicant: Schneider Electric Systems Italia S.p.A., 24040 Stezzano (BG) (IT)
(72) Inventor: BRUNOT, Pascal, 24123 Bergamo (IT); MEICHAEL, Mina Shokralla Zekry Yasa, 20099 Sesto San Giovanni (IT)
(74) Representative: Friese Goeden Patentanwälte PartGmbB

(57) **Abstract**

System and methods for testing input/output (I/O) points in an automation system. A control system software agent in the automation system is configured to send and receive test setpoints for the automation system. A testing server specifies the test setpoints to the automation system for a plurality of I/O points to be tested and generates a web user interface presenting instructions for conducting testing of the I/O points using the specified test setpoints. A user computing device associated with the I/O points to be tested receives the web user interface and displays the instructions, communicates the instructions to a smart meter for applying input signals to the I/O points to be tested and/or measuring output signals from the I/O points to be tested in accordance with the instructions, and communicates results of the testing to the testing server for generating documentation.

## Description

### BACKGROUND

A Factory Acceptance Test (FAT) is a process for evaluating equipment during and after the assembly process to verify equipment meets design specifications. The FAT ensures that the components and controls are working properly according to the functionality of the equipment itself. Any deviations or abnormalities observed during testing should be documented in a problem report and corrected prior to final installation. The FAT process typically involves a customized testing procedure for input/output (I/O) testing to validate the operation of the equipment and ensure it meets specifications as well as documentation supporting the testing and results. In the context of industrial automation, the FAT ensures that a newly manufactured control system works properly before delivery of the control cabinet to a customer.

### SUMMARY

Aspects of the present disclosure achieve strict integration with automation and testing procedures for automated I/O testing that covers automation of a wide variety of signals, including current loop, voltage loop, resistance temperature detector (RTD), thermocouples, dry contacts, monitored signals with variable resistance, and frequency/pulse.

In an aspect, a testing system for testing I/O points in an automation system comprises a testing server and a user computing device communicatively coupled to each other via a communication network. The system also comprises a meter configured to generate test signals and to acquire measurements and a plurality of software agents stored in a computer-readable storage medium of the automation system. The software agents include at least a control system agent configured to send and receive test setpoints for a control system of the automation system, which is configured to specify operating setpoints for one or more controllers of the automation system. The testing server is configured to execute computer-executable instructions for specifying the test setpoints to the control system for a plurality of I/O points to be tested and generating a web user interface presenting instructions for conducting testing of the I/O points using the specified test setpoints. The user computing device, which is associated with the I/O points to be tested, is configured to execute computer-executable instructions for receiving the web user interface and displaying the instructions to an operator conducting the testing, communicating the instructions to the meter for applying input signals to the I/O points to be tested and/or measuring output signals from the I/O points to be tested in accordance with the instructions, and communicating results of the testing of the I/O points to the testing server.

In another aspect, a method of performing automated testing of I/O points in an automation system comprises executing a control system software agent stored in a computer-readable storage medium of the automation system. The control system software agent, when executed, sends and receives test setpoints for the control system. The method also includes generating, by a testing server, a web user interface presenting instructions for conducting testing of a plurality of I/O points using the test setpoint and receiving, by a user computing device, the web user interface and displaying the instructions to an operator conducting the testing. The method further comprises communicating the instructions to a meter configured to generate test signals and to acquire measurements, applying input signals to the I/O points to be tested and/or measuring output signals from the I/O points to be tested by the meter in accordance with the instructions, and communicating results of the testing of the I/O points to the testing server.

In yet another aspect, a method for performing remote I/O point testing using an automated testing system comprises selecting one or more remote cabinets on which the I/O point testing is to be performed and initiating the I/O point testing on the selected one or more remote cabinets. In response to an output point testing being initiated on the selected one or more remote cabinets, the method includes sending measurement instructions to a Bluetooth-enabled meter via a web interface and, simultaneously with sending the measurement instructions, sending instructions to the automated testing system to generate an output signal for performing a first test case of the output point testing. The method further comprises comparing a measurement recorded by the Bluetooth-enabled meter with the output signal. If the recorded measurement is within an acceptable tolerance of the output signal, the method automatically proceeds to a next test case of the output point testing. If the recorded measurement is outside the acceptable tolerance of the output signal, the method automatically notifies an operator of a failed test status and provides an option to re-perform the first test case of the output point testing. The method also includes saving a result of the output point testing in a database.

Other objects and features of the present disclosure will be in part apparent and in part pointed out herein.

### BRIEF DESCRIPTION OF THE DRAWINGS

FIG. 1 illustrates an example architecture implementing the testing system of the present disclosure according to an embodiment.
FIG. 2 illustrates further aspects of the example architecture of FIG. 1.
FIGS. 3A to 3C illustrate an example testing according to an embodiment.
FIG. 4 illustrates an example web user interface according to an embodiment.
FIG. 5 is an example user interface I/O point test screen according to an embodiment.
FIG. 6 is a schematic diagram illustrating a signal conditioning test circuit for testing special type I/O signals according to an embodiment.
FIG. 7 illustrates a sample generated report.

Corresponding reference numbers indicate corresponding parts throughout the drawings.

### DETAILED DESCRIPTION

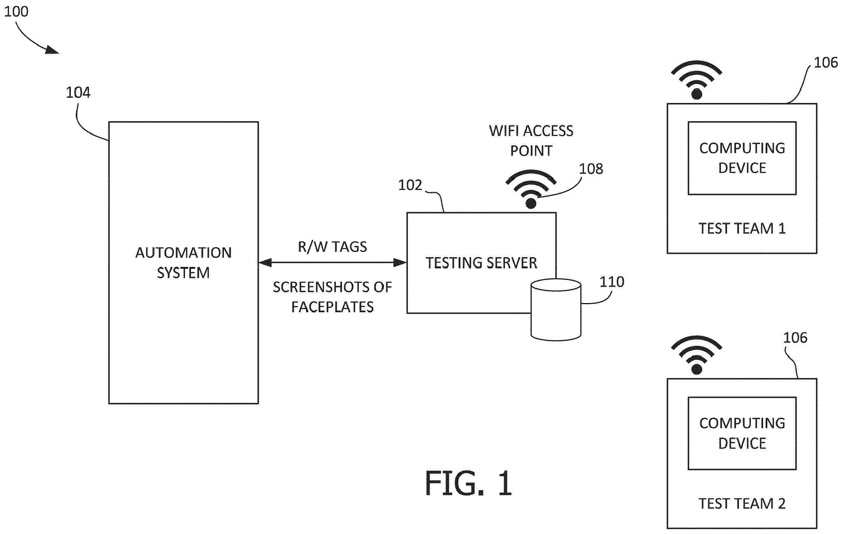

FIG. 1 illustrates an example architecture implementing a testing system 100 of the present disclosure. In the illustrated embodiment, a testing server 102 provides read/write to an automation system 104. In addition, the testing server 102 is configured to capture screenshots, save the captured images, and generate test documentation. The testing server 102 communicates with a user computing device 106 for use by a testing team at a control cabinet to be tested. Typical cabinets include, for example, central processing units, input and output cards, switches, and power supplies. The testing server 102 communicates with the user computing device 106 via a wireless network according to WiFi, Bluetooth, or another wireless communication protocol. In the embodiment of FIG. 1, testing server 102 includes a WiFi access point 108 for communicating with user computing device 106. The user computing device 106 receives test instructions and feedback from testing server 102 and sends images and notes for including in the generated documentation via the wireless network.

In an embodiment, an automation engineer prepares and loads the information of the points to be tested in an I/O database 110 associated with testing server 102. The I/O database 110 contains the symbolic name, or tag, for each of the I/O points to be tested, terminal block information for the operator, and scaling information. A web application running on testing server 102 may be used to assign cabinets to an operator (i.e., a tester). After an authentication has been performed, the tester can access the list of cabinets, and their I/O points, via user computing device 106. The operator can then select a cabinet and I/O point (by type, completion status, or terminal block order).

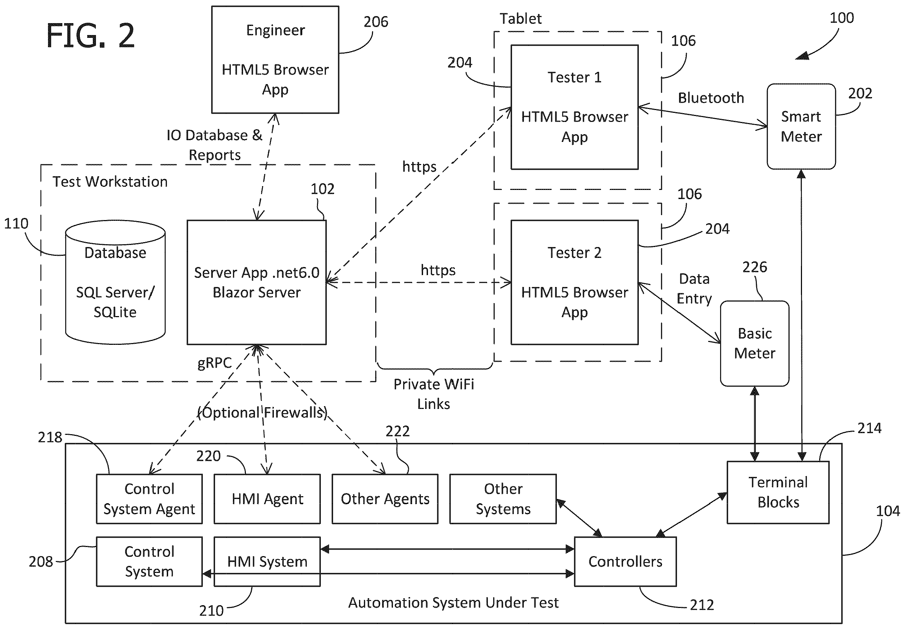

Referring now to FIG. 2, aspects of the present disclosure perform faster I/O point testing of the automation system 104, and facilitate scenarios where the manufacturing location is distant from engineering and customer locations. In an embodiment, testing system 100 further comprises a Bluetooth-enabled smart calibrator device 202. The calibrator device 202 communicates with user computing device 106 (e.g., a mobile device with Bluetooth and WiFi connectivity, such as a ruggedized tablet). The user computing device 106 executes a browser application 204 that displays a web user interface for presenting testing information to a test team user or operator (e.g., an electrician performing the I/O points testing). The testing server 102 in FIG. 2 comprises a dedicated test workstation that executes a browser application 206 that generates and hosts the web user interface for presenting the testing information to a control room user (e.g., a test engineer). The testing system 102 embodying aspects of the present disclosure includes a single user interface that provides both guidance (test cases execution) and visual feedback on the I/O test, as well as integration of the measurement and generation device into the testing procedure for faster execution.

As shown in FIG. 2, automation system 104 includes a control system 208, a Human-Machine Interface (HMI) system 210; and one or more controllers 212 connected to a plurality of terminal blocks 214 within, for example, a control cabinet. According to aspects of the present disclosure, automation system 104 further includes software agents running in the system 104 that is undergoing under testing. The automation system 104 includes a control system agent 218 and an HMI agent 220 as well as other agents 222 depending on the systems to be tested. The architecture of the testing system 102 includes modular software agents 218, 220, 222 to connect to different types of automation systems (e.g., Modicon, Foxboro, Triconex) thus allowing its use in complex systems. Minimal connections to the target system are needed, which promotes better cybersecurity.

In an embodiment, the control system agent 218 sends and receives setpoints to and from the control system 208 and the HMI agent 220 captures screenshots from the HMI system 210. The testing server 102 communicates with the software agents 218, 220, 222 via a Remote Procedure Call (RPC) framework. In alternative embodiments, testing system 102 also comprises firewalls and/or signal conditioners between testing server 102 and automation system 104 depending on the specific project requirements.

The smart calibrator device 202 is a flexible device for maintenance and testing of sensors and process meters. A suitable calibrator device for use with the I/O testing system 100 of the present disclosure is the MSC Multifunction Smart Calibrator available from Seneca s.r.l. The device preferably provides measurement, generation, and simulation of analog and digital signals, temperature sensors, and load cells with an accuracy of 0.05% for each type of input/output. Data visualization and parameters settings are provided via a USB cable or Bluetooth connection. It is to be understood that smart calibrator device 202 may be coupled to user computing device 106 via Bluetooth, WiFi, near-field communication (NFC), or the like or hardwired or connected via a direct connection such as Universal Serial Bus (USB). In addition to or instead of smart calibrator device 202, a basic meter 226 may be used for testing the I/O points.

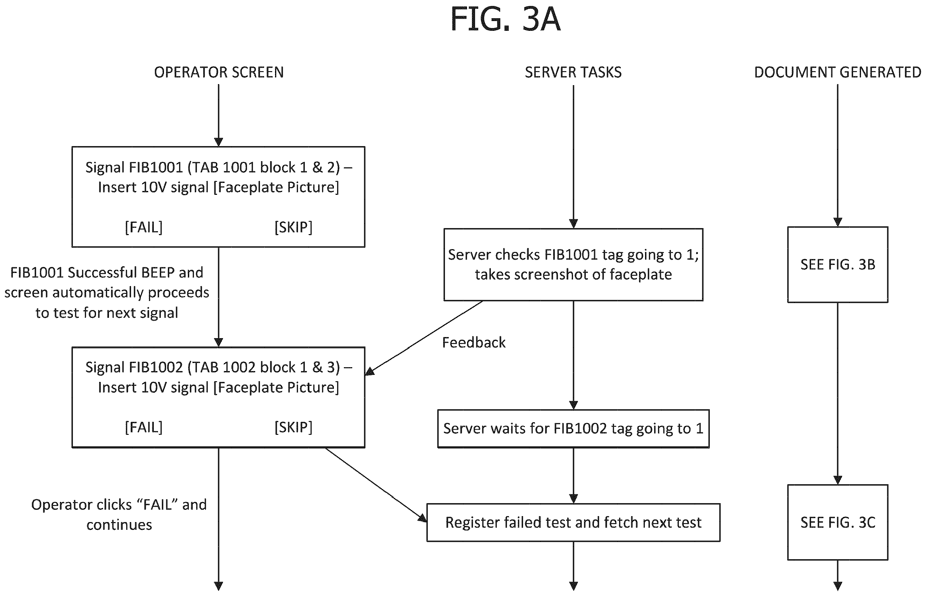

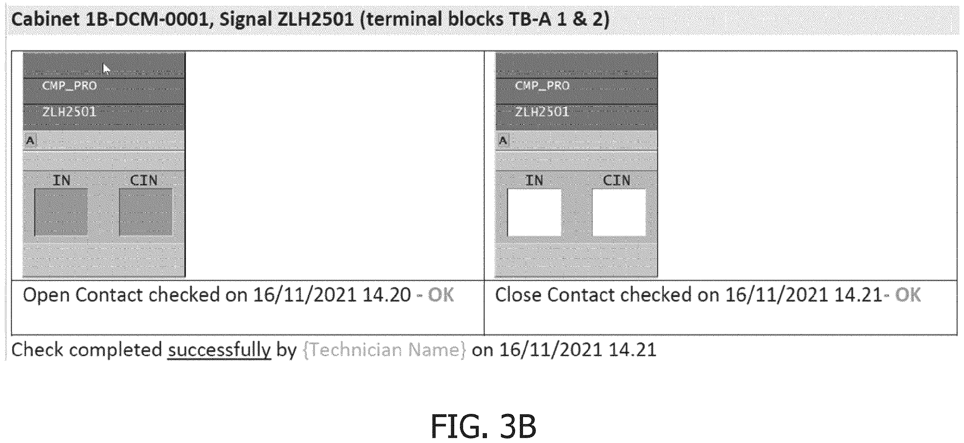

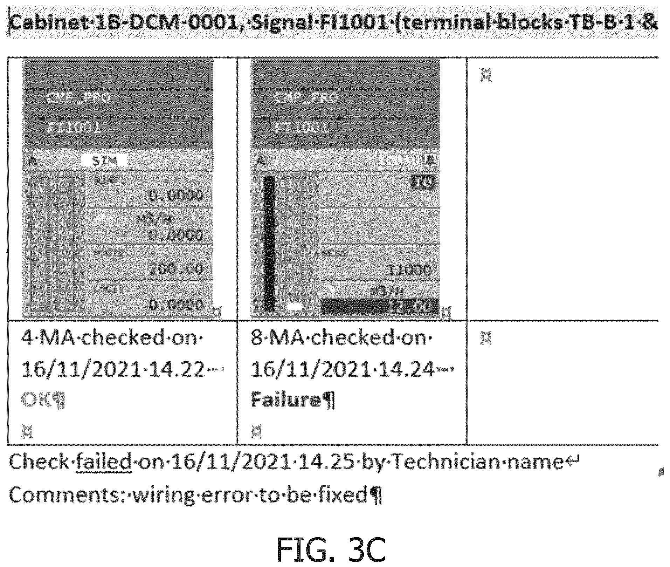

FIGS. 3A to 3C illustrate an example testing according to an embodiment. In this example, the browser 204 of user computing device 106 displays the user interface to the test team user or operator as an "operator screen" with instructions for which I/O point is to be tested. In operation, testing system 100 automates the signal injection and measurement processes rather than relying on manually operated multimeters and signal injectors. The testing system 100 provides detailed instructions to the operator via the user interface, including terminal block numbers and automatic advancement of test cases, and user computing device 106 communicates directly with smart calibrator device 202 to generate and apply the specified signal. The testing system 100 also provides live feedback to the operator of the current test using an HMI I/O popup display visualization. In addition, testing system 100 provides documented evidence of the test execution including expected values, measured values, time of execution, and a screenshot. Aspects of the present disclosure cover a comprehensive variety of automation of signals, such as current loop, voltage loop, resistance temperature detectors (RTD), thermocouples, dry contacts, monitored signals with variable resistance, and frequency/pulse.

As an example of output point testing, user computing device 106 sends instructions to the Bluetooth-enabled meter 202 to measure current as indicated on the web user interface. At the same time, testing server 102 sends an instruction to automation system 104 to generate the output signal (i.e., setpoint) and takes a screenshot of HMI system 210. The testing server 102 then converts the acquired measurement (e.g. current) into engineering units, and compares it to the setpoint. If the values match within tolerance, the user interface displays the next test case to the operator. Otherwise, the user interface shows a failure status together with the measured and setpoint values and the screenshot to the operator for retry. In every case, the test data is saved into database 110.

As an example of input point testing, user computing device 106 sends setpoint instructions to meter 202 acting as a generator (e.g., generate 10V) as indicated on the web user interface. At the same time, testing server 102 sends an instruction to automation system 104 to read the input signal (i.e., measure) and takes a screenshot of HMI system 210. The testing server 102 then converts the setpoint into engineering units, and compares it to the measured value. If the values match within tolerance, the user interface displays the next test case to the operator. Otherwise, the user interface shows a failure status together with the measured and setpoint values and the screenshot to the operator for retry. In every case, the test data is saved into database 110.

The executed test cases can be saved in Word/Excel format with the details of operator name, time of operation, I/O point details, expected value, measured value, test result, screenshot, meter serial number, etc.

Advantageously, testing system 102 reduces the time to perform a single test (e.g., 4 values in 12 seconds, which is a 10x improvement versus the average time), lowers the knowledge requirements for I/O testing (it allows execution by electricians, without requiring the skill to read electrical schemas, and does not require automation specialists), increases the completeness of the test documentation, reduces mobilization at the manufacturing yard of customer and automation specialists, and categorizes photos and videos taken by the operator with the table to specific equipment without manual sorting. Another benefit of testing system 102 is that it allows manufacturing personnel to start integration tests with the automation system during the internal testing phase, so that the customer testing phase is reached with documented evidence of a complete end-to-end testing (rather than Excel files or marked-up documents). This evidence facilitates customer acceptance of sample checks, rather than requiring a 100% I/O check during a Factory Acceptance Test (FAT), which delivers a drastic reduction of overall FAT duration (e.g., 50 % reduction). As FAT is on the critical path of most industrial automation projects, the testing system and methods of the present disclosure reduce risks and provides capital costs benefits to the overall automation project schedule. Unlike testing system 102, conventional solutions are unable to achieve the tight integration with automation and testing procedure required for automated I/O testing.

In addition, the test data collected by the disclosed testing system can be further used in different ways:
- Measurement of defect rates and improvement of panel builder assembly quality;
- Estimating the completion date of the FAT, based on measured rate of testing;
- Integrating I/O testing with the overall FAT quality workflow ("punch list"); and
- Providing a view-only access to remote stakeholders not physically present in the staging (database could be hosted in a cloud).

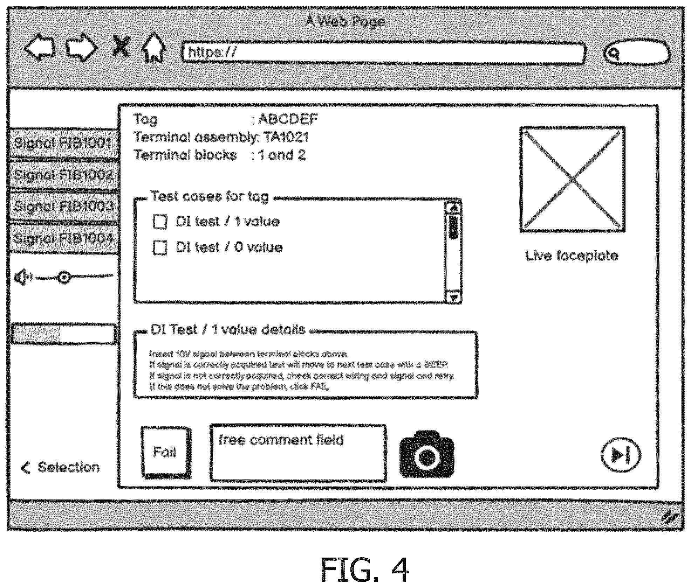

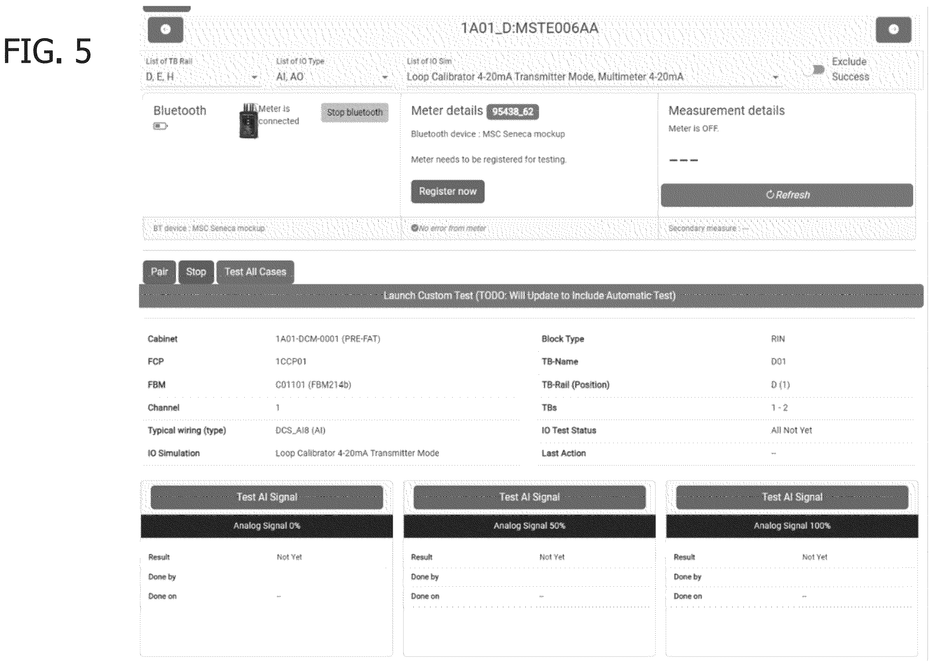

FIGS. 4 and 5 illustrate example web user interfaces embodying aspects of the present disclosure. The user interface of FIG. 4 displays a list of test cases in the left margin. In addition, the user can select a volume for a beep or other audio alert indicating when the test has been completed. The user interface also indicates overall progress of the test using a progress bar or the like. FIG. 5 is an example user interface I/O point test screen indicating I/O point for testing, including its location, and different levels test signals to be applied.

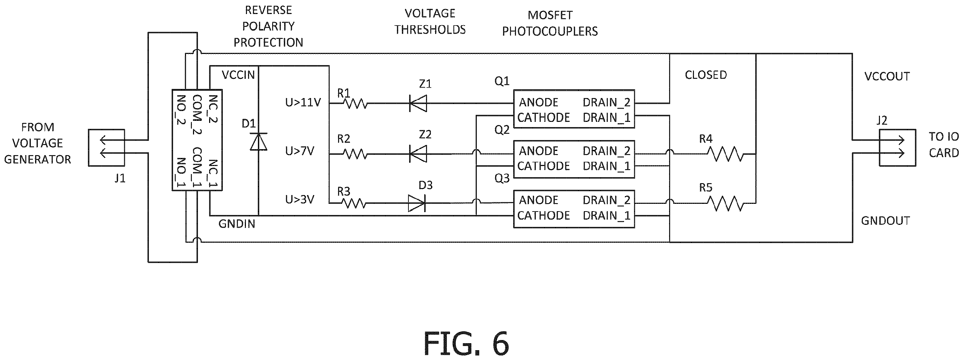

FIG. 6 is a schematic diagram illustrating signal conditioning test circuit for testing special type I/O signals. According to an embodiment, the signal conditioning test circuit of FIG. 6 is used in conjunction with smart meter 202, which supplies the test voltage to the circuit.

Advantageously, system engineering is needed only for system setup, which saves time and improves productivity. For example, the system guides all steps, and provides immediate audio/video feedback to the test engineer. In addition, the test engineers do not need to know faceplates and to read the loop diagram from terminal block to the HMI SCADA. Improved automated PREFAT documentation permits remote FAT to be done efficiently by sampling rather than full I/O tests.

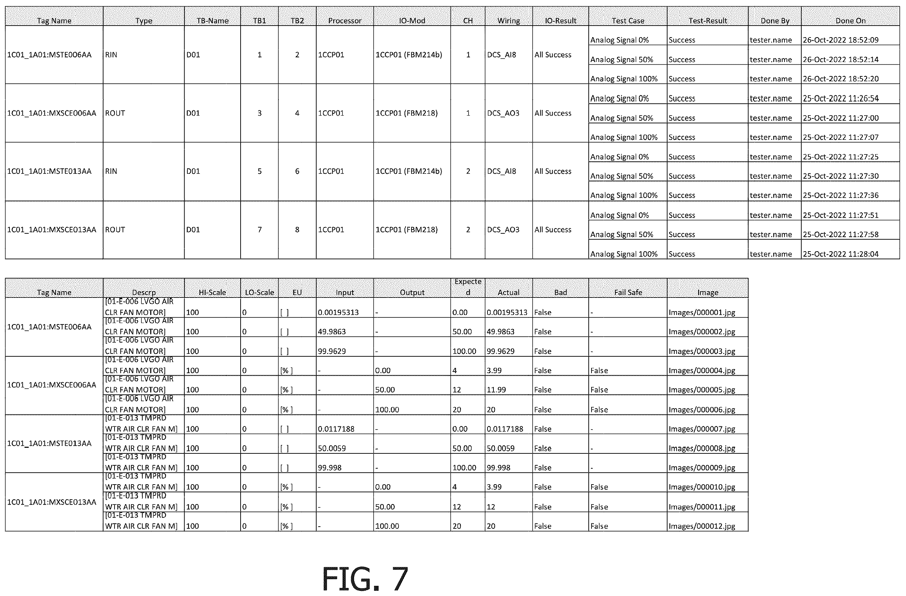

FIG. 7 provides an excerpt of a sample generated report: SAMPLE Cabinet (1A01-DCM-0001) Test Stage: (PREFAT).

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

Accordingly, the present invention can also be described as follows: Closed-loop input/output points testing. System and methods for testing input/output (I/O) points in an automation system. A control system software agent in the automation system is configured to send and receive test setpoints for the automation system. A testing server specifies the test setpoints to the automation system for a plurality of I/O points to be tested and generates a web user interface presenting instructions for conducting testing of the I/O points using the specified test setpoints. A user computing device associated with the I/O points to be tested receives the web user interface and displays the instructions, communicates the instructions to a smart meter for applying input signals to the I/O points to be tested and/or measuring output signals from the I/O points to be tested in accordance with the instructions, and communicates results of the testing to the testing server for generating documentation.

## Claims

1. Testing system for testing input and/or output (I/O) points in an automation system, the automation system comprising a control system configured to specify operating setpoints for one or more controllers of the automation system, the testing system comprising:
a testing server;
a user computing device communicatively coupled to the testing server via a communication network, the user computing device associated with a plurality of I/O points to be tested;
a meter configured to generate test signals and to acquire measurements, the meter communicatively coupled to the user computing device; and
a plurality of software agents stored in a computer-readable storage medium of the automation system, the software agents including at least a control system agent configured to send and receive test setpoints for the control system;
wherein the testing server is configured to execute computer-executable instructions for:
specifying the test setpoints to the control system of the automation system for the I/O points to be tested, and
generating a web user interface presenting instructions for conducting testing of the I/O points using the specified test setpoints; and
wherein the user computing device is configured to execute computer-executable instructions for:
receiving the web user interface and displaying the instructions to an operator conducting the testing,
communicating the instructions to the meter for applying input signals to the I/O points to be tested and/or measuring output signals from the I/O points to be tested in accordance with the instructions, and
communicating results of the testing of the I/O points to the testing server.

2. Testing system as set forth in claim 1, wherein the communication network comprises a wireless access point associated with the testing server for communicatively coupling the testing server and the user computing device.

3. Testing system as set forth in claim 1 or claim 2, further comprising a firewall providing secure network traffic between the automation system and the testing server.

4. Testing system as set forth in any of the preceding claims, further comprising a signal conditioning circuit configured to receive and condition the input signals from the meter before applying the input signals to the I/O points to be tested.

5. Testing system as set forth in any of the preceding claims, wherein the testing server is further configured to execute computer-executable instructions for generating a report documenting the testing of the I/O points, wherein the automation system further comprises a human-machine interface (HMI) system by which a user interacts with the automation system, and wherein the software agents include an HMI agent for capturing a screenshot from the HMI system of the automation system for use in the report generated by the testing server.

6. Testing system as set forth in any of the preceding claims, further comprising an I/O database coupled to the testing server, the I/O database storing information relating to the I/O points to be tested.

7. Testing system as set forth in claim 6, wherein the I/O database contains one or more of symbolic names for the I/O points to be tested, terminal block information for the operator, and scaling information.

8. Method of performing automated testing of input and/or output (I/O) points in an automation system, the automation system comprising a control system configured to specify operating setpoints for one or more controllers of the automation system, the method comprising:
executing a control system software agent stored in a computer-readable storage medium of the automation system, the control system software agent, when executed, sending and receiving test setpoints for the control system;
generating, by a testing server, a web user interface presenting instructions for conducting testing of a plurality of I/O points using the test setpoints; and
receiving, by a user computing device, the web user interface and displaying the instructions to an operator conducting the testing, wherein the user computing device is communicatively coupled to the testing server via a communication network;
communicating the instructions to a meter configured to generate test signals and to acquire measurements, wherein the meter is communicatively coupled to the user computing device;
applying input signals to the I/O points to be tested and/or measuring output signals from the I/O points to be tested by the meter in accordance with the instructions, and
communicating results of the testing of the I/O points to the testing server.

9. Method as set forth in claim 8, further comprising receiving, by a signal conditioning circuit, the input signals from the meter and conditioning the received input signals before applying the input signals to the I/O points to be tested.

10. Method as set forth in claim 8 or claim 9, wherein the testing server is coupled to an I/O database storing information relating to the I/O points to be tested, and further comprising generating the web user interface comprises retrieving the stored information from the I/O database to develop the instructions for conducting the testing.

11. Method as set forth in any of claims 8 to 10, further comprising executing a browser application to generate the web user interface.

12. Method as set forth in any of claims 8 to 11, further comprising generating a report documenting the testing of the I/O points, wherein the automation system further comprises a human-machine interface (HMI) system by which a user interacts with the automation system, and further comprising executing an HMI system software agent, wherein the HMI system software agent, when executed, captures a screenshot from the HMI system of the automation system for use in the report generated by the testing server.

13. Method as set forth in claim 12, wherein the I/O database contains one or more of symbolic names for the I/O points to be tested, terminal block information for the operator, and scaling information.

14. Method as set forth in any of claims 8 to 13, further comprising:
selecting one or more remote cabinets on which the I/O point testing is to be performed;
initiating the I/O point testing on the selected one or more remote cabinets;
in response to an output point testing being initiated on the selected one or more remote cabinets, performing the following actions:
sending measurement instructions to a Bluetooth-enabled meter via a web interface;
simultaneously with sending the measurement instructions, sending instructions to the automated testing system to generate an output signal for performing a first test case of the output point testing;
comparing a measurement recorded by the Bluetooth-enabled meter with the output signal;
in response to the recorded measurement being within an acceptable tolerance of the output signal, automatically proceeding to a next test case of the output point testing;
in response to the recorded measurement being outside the acceptable tolerance of the output signal, automatically notifying an operator of a failed test status and providing an option to re-perform the first test case of the output point testing; and
saving a result of the output point testing in a database.

15. Method as set forth in claim 14, further comprising:
in response to an input point testing being initiated on the selected one or more remote cabinets, performing the following actions:
sending signal generation instructions to a Bluetooth-enabled signal generator via the web interface;
simultaneously with sending the signal generation instructions, sending instructions to the automated testing system to measure an input signal for performing a first test case of the input point testing;
comparing the measured input signal to a signal generated by the signal generator;
in response to the measured input signal being within an acceptable tolerance of the signal generated by the signal generator, automatically proceeding to a next test case of the input point testing;
in response to the measured input signal being outside the acceptable tolerance of the signal generated by the signal generator, automatically notifying the operator of a failed test status and providing an option to re-perform the first test case of the input point testing; and
saving a result of the input point testing in the database.
